# EUROPEAN PATENT SPECIFICATION

(11) **EP 1 975 905 B1**
(45) Date of publication and mention of the grant of the patent: **06.12.2017**
(21) Application number: 06745634.3
(22) Date of filing: 25.04.2006
(51) Int. Cl.: G09B 19/08, A63H 33/38

(54) **LANGUAGE LEARNING DEVICE**
SPRACHENLERNEINRICHTUNG
DISPOSITIF D'APPRENTISSAGE DE LANGAGE

(30) Priority: 27.12.2005 JP 2005011057 U; 27.12.2005 JP 2005011058 U
(43) Date of publication of application: 01.10.2008
(73) Proprietor: Austwick, Stephen, Shinagawa-ku, Tokyo, 140-0013 (JP)
(72) Inventor: TSUBOMATSU, Izumi, Yokohama-shi, Kanagawa 2450066 (JP)
(74) Representative: Fairbairn, Angus Chisholm
(86) International application number: PCT/JP2006/308606
(87) International publication number: WO 2007/074546

(56) References cited:
- FR-A1- 2 646 126
- JP-U- 3 082 241
- JP-U- 3 102 729
- JP-U- 3 102 729
- JP-U- 57 103 872
- US-A- 4 702 700

## Description

### TECHNICAL FIELD

The present invention relates to a learning device essentially used for language learning. Specifically, the present invention relates to a device for visual learning assistance which is used for a teacher to show to pupils for teaching them letters, word structure and pronunciation.

### BACKGROUND ART

Conventionally, there is known from Japanese registered utility models Nos. 3035367 and 3062445 a card which has displayed on the front side a sign such as a letter, a phrase, a picture or the like and on the reverse side a sign relating to the previous sign and which is used in comparing the two sides for learning. There are also known from Japanese unexamined patent application publication No. 2004-1428 cards, one displaying a sign such as a letter, a phrase, a picture or the like and the other having a sign relating to the previous sign, to be compared with each other for learning.

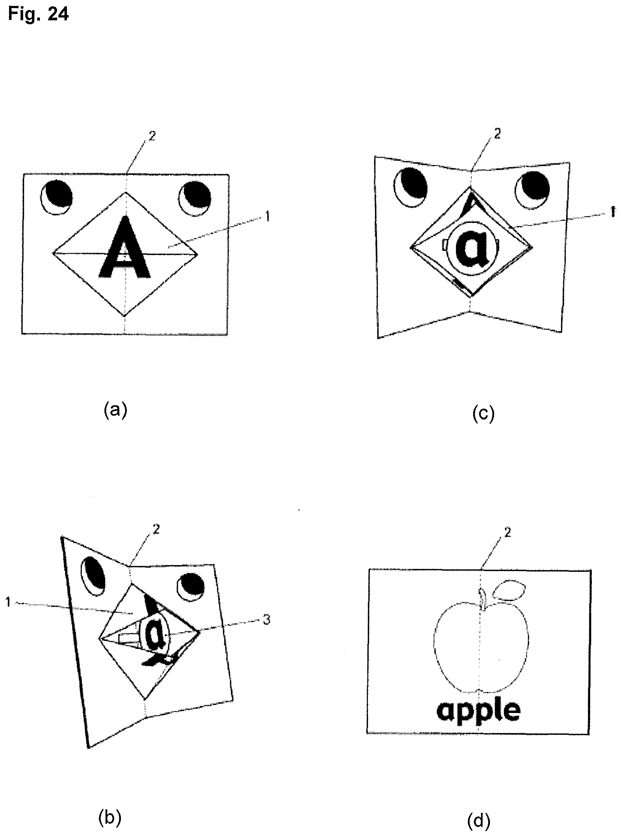

As an invention of the inventor of the present application, there is known from Japanese registered utility model No. 3102729 a language learning device comprising a learning device body as shown herein in Fig. 24(a)-(d), which comprises a lid-like member **1** and a rising/lowering member. The lid-like member **1** is caused to rise or fall by decreasing or increasing the distance between its base sides and comprises a plurality of component members respectively having neighboring edges that are in contact with each other when they are laid flat and separated from each other to form an opening when they are raised. The rising/lowering member is located inside the lid-like member **1** and experiences rising or falling with the decreasing or increasing of the distance between the base sides. Each of the base sides of the lid-like member **1** and each of the base sides of the rising/lowering member are fixed to the surface of a base board which is bent along a folding line **2,** so that the distance between the base sides is changed by bending the base board so as to raise or lower the lid-like member **1** and the rising/lowering member in order to make the rising/lowering member becomes visible in the opening formed when the lid-like member **1** is raised. The surface of the lid-like member is provided with a sign differing from one provided on the leading end **3** of the rising/lowering member, so that the different signs are visually recognized in accord with the bending of the base board. In this learning device, the learning device body is designed as the face of a duck and the lid-like member **1** is designed as the beak of the duck. When the device body is opened out flat, a capital letter of the alphabet is seen on the flat closed beak. The base board is then bent along the folding line **2** created at the center between the right and left halves of the base board, in such a manner as to form a V shape with the right and left halves . As a result, the lid-like member **1** (beak) rises three-dimensionally so as to separate the neighboring edges of the component members from each other, so that the lid-like member **1** comes into a state as of an open beak, whereupon a small letter of the alphabet provided on the leading end **3** of the rising/lowering member rising pops up from the inside of the beak. In this manner, by alternatively folding the base board along the center folding line **2** and opening it flat, the lid-like member **1** designed as the beak is raised and lowered so as to open and close the mouth and the rising/lowering member inside moves in and out inside the mouth, so that the capital letter and the small letter are alternately visible. As a result, the learning device is effective at helping beginners of English learn the alphabet.
Patent Document 1: Japanese Registered Utility Model No. 3035367
Patent Document 2: Japanese Registered Utility Model No. 3062445
Patent Document 3: Japanese unexamined patent application publication No. 2004-1428
Patent Document 4: Japanese Registered Utility Model No. 3102729

### DISCLOSURE OF THE INVENTION

### PROBLEMS TO BE SOLVED BY THE INVENTION

It is an object of the present invention to provide an improvement invention directly on the invention disclosed in the aforementioned registered utility model No. 3102729 as the prior art to further enhance its functions.

In the aforementioned invention, the sign provided on the surface of the lid-like member and the sign provided on the surface of the rising/lowering member are limited to having a one-to-one relationship, so that the number of teachable items using a single learning device is only one. Due to the fact that a folding line is provided in one central place on the base board so that the right and left halves of the base board are turned toward each other in a V shape, when a teacher uses the learning device, the teacher must support the right side and the left side of the base board with both hands, resulting in the inconvenience of being incapable of doing other work because his/her hands are full.

### MEANS FOR SOLVING THE PROBLEM

To attain the above object, the invention according to claim 1 of the application provides a language learning device which comprises a learning device body including a base board having a surface to which are fixed each of the base sides of a lid-like member and also each of the base sides of a rising/lowering member, wherein
(1) the lid-like member rises/falls with decreasing/increasing of the distance between the base sides of the lid-like member and comprises a plurality of component members having neighboring edges that are in contact with each other when they are laid flat and separated from each other to form an opening when they are raised,
(2) the rising/lowering member is located inside the lid-like member and rises/falls with decreasing/increasing of the distance between the base sides of the rising/lowering member,
(3) the base board is bendable along folding lines provided in two places, so that right and left portions of the base board, which respectively extend from the folding lines to the outer edges, are bendable relative to an intermediate portion of the base board interposed between the folding lines, so that the distance between the base sides of the lid-like member and between the base sides of the rising/lowering member is changed by bending the base board so as to raise/lower the lid-like member and the rising/lowering member in order to make the rising/lowering member become visible from the opening formed when the lid-like member rises, and
(4) the language learning device has different signs respectively placed on the surface of the lid-like member and the leading end of the rising/lowering member, so that the different signs become visually recognized in accord with the bending of the base board.

### ADVANTAGES OF THE INVENTION

In the learning device according to claim 1 of this invention, because the right and left portions are bent relative to the intermediate portion of the base board, a teacher can hold the intermediate portion of the base board between his/her body and upper arms or between his/her legs. Accordingly, the teacher does not need both hands to operate the learning device, which makes it possible for the teacher to do other work with his/her free hands, and for a person having a hand disability to use the learning device.

In the learning device according to claim 2 of this invention, because the sign assigned to the leading end of the rising/lowering member is detachably provided to the rising/lowering member, the relationship between the sign assigned to the surface of the lid-like member and the sign assigned to the surface of the rising/lowering member is prevented from being limited to the one-to-one relationship. Accordingly, when a plurality of sign boards are provided for assignment to the leading end of the rising/lowering member, flexible teaching from various angles is made possible. For example, when the letter "A" or "a" is displayed on the learning device body and a word including the letter is displayed on the leading end of the rising/lowering member, only one word can be shown in conventional art. When a teacher wants to teach a plurality of words, he/she is required to provide a plurality of types of learning devices. However, according to the present invention, the provision of a plurality of types of sign boards made for a single learning device body, for example, provision of the sign boards on which "apple", "ant", "axe" and the like are printed for "A" or "a", makes it possible to teach a plurality of words without changing the learning device body.

Further, when the structure of the learning device according to claim 6 is added to the learning device according to claim 1, a teacher holding the learning device with one hand can detach and attach the sign board with his/her free hand, resulting in elimination of the need for changing one's grip on the learning device whenever the sign boards are changed, making smooth teaching work possible.

### BRIEF DESCRIPTION OF THE DRAWINGS

[Fig. 1]

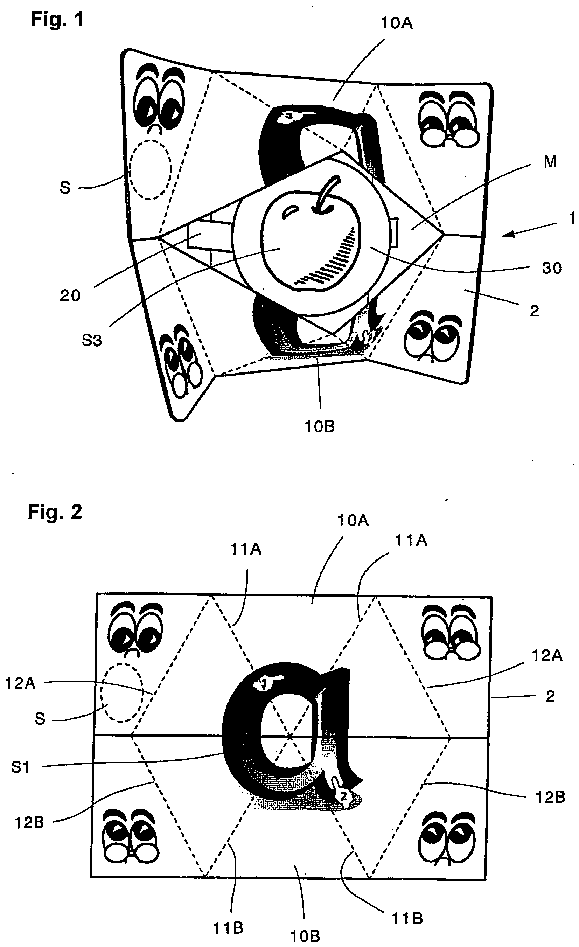

   Fig. 1 is a perspective view of a first embodiment of a language learning device of the present invention when it is bent.
[Fig. 2]
   Fig. 2 is a plane view of the first embodiment of the language learning device of the present invention when it is opened out flat.
[Fig. 3]

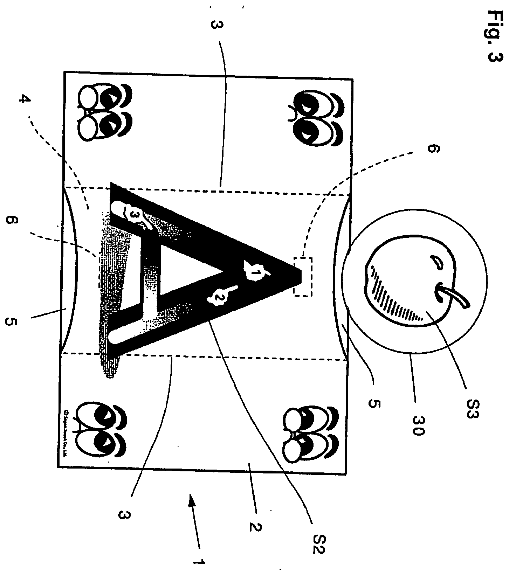

   Fig. 3 is a back view of the first embodiment of the language learning device of the present invention when it is opened out flat.
[Fig. 4]

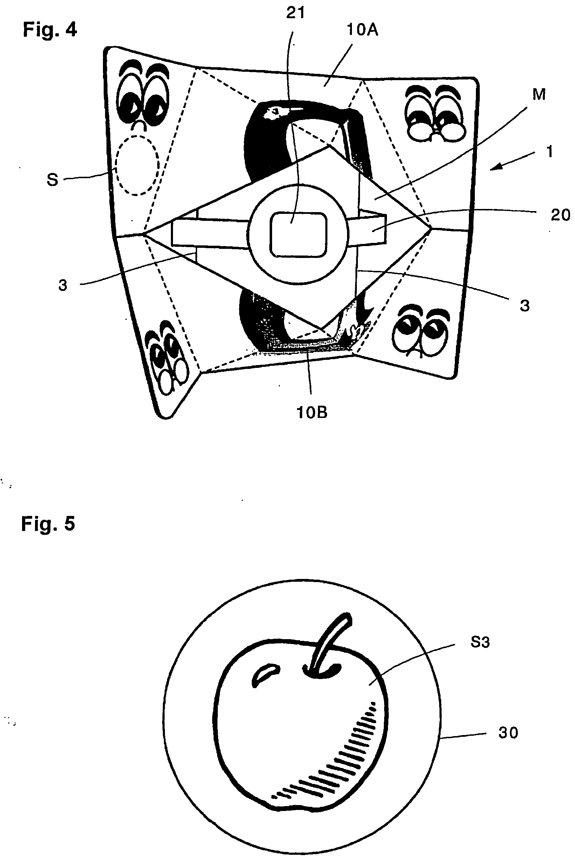

   Fig. 4 is a perspective view of the first embodiment of the language learning device of the present invention when it is bent and the sign board is removed.
[Fig. 5]
   Fig. 5 is a plane view of the sign board of the first embodiment of the language learning device of the present invention.
[Fig. 6]

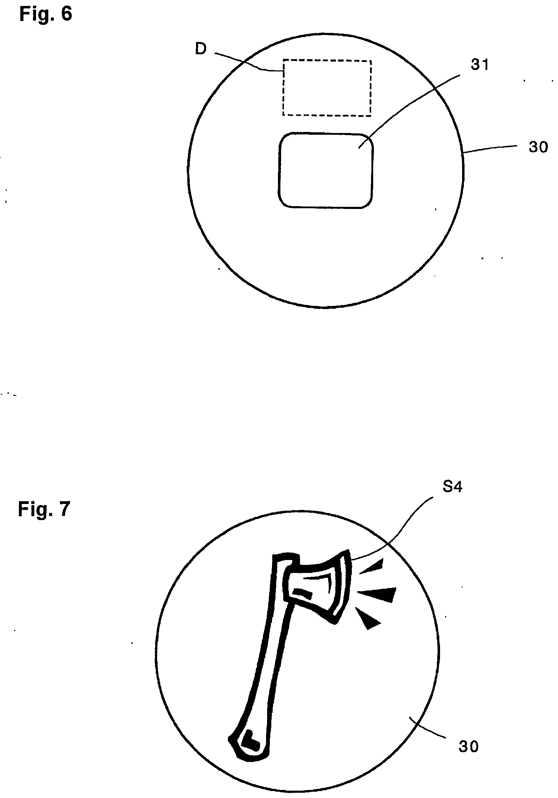

   Fig. 6 is a back view of the sign board of the first embodiment of the language learning device of the present invention.
[Fig. 7]
   Fig. 7 is a plane view of another form of a sign board of the first embodiment of the language learning device of the present invention.
[Fig. 8]

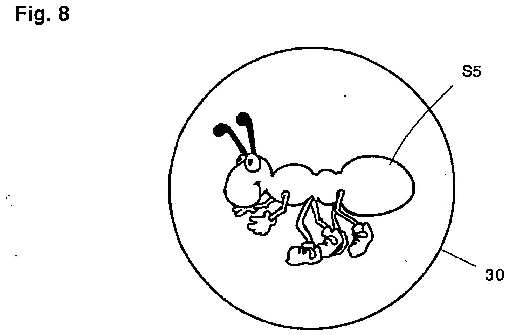

   Fig. 8 is a plane view of another form of a sign board of the first embodiment of the language learning device of the present invention.
[Fig. 9]

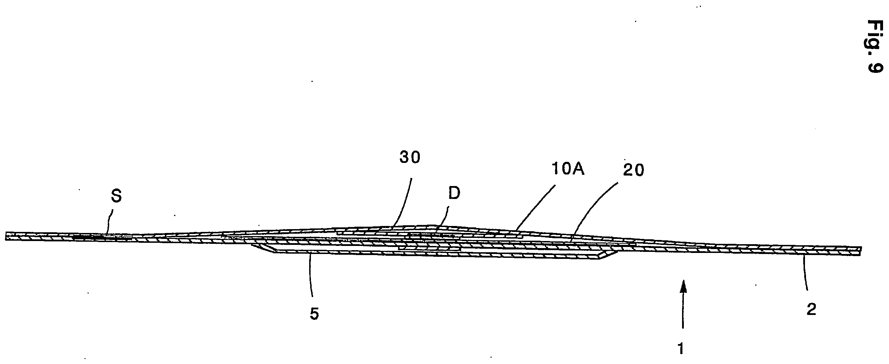

   Fig. 9 is a sectional view of the first embodiment of the language learning device of the present invention when it is opened out flat.
[Fig. 10]

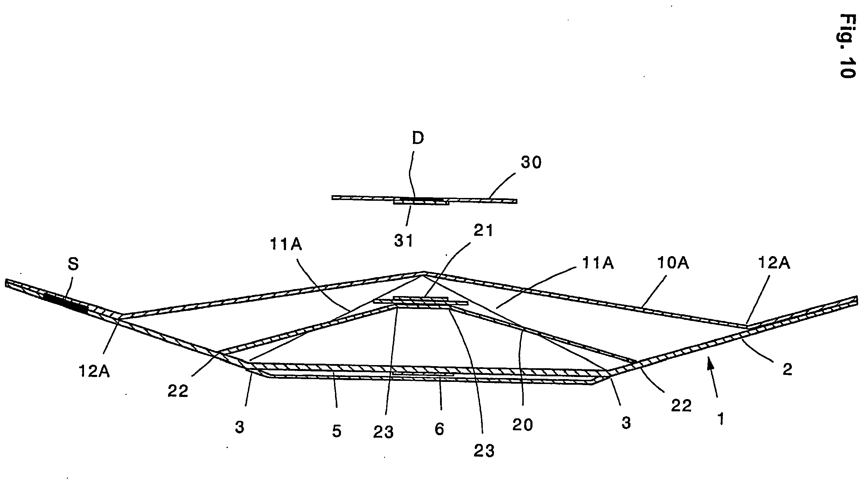

   Fig. 10 is a sectional view of the first embodiment of the language learning device of the present invention when it is bent.
[Fig. 11]

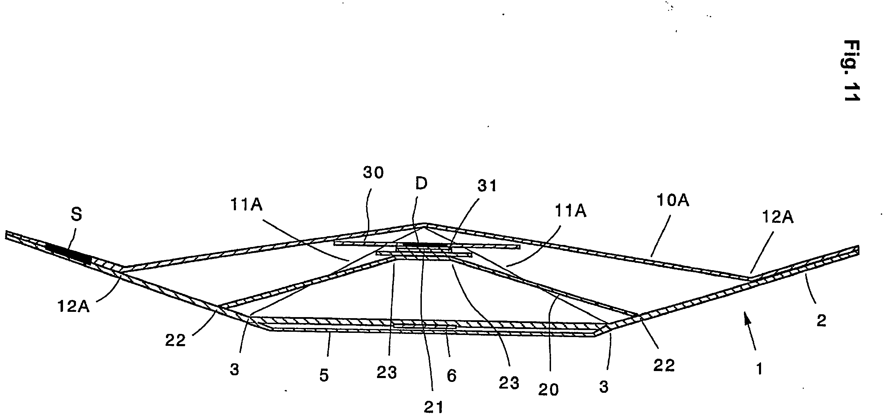

   Fig. 11 is a sectional view of the first embodiment of the language learning device of the present invention when it is bent and the sign board is removed.
[Fig. 18]

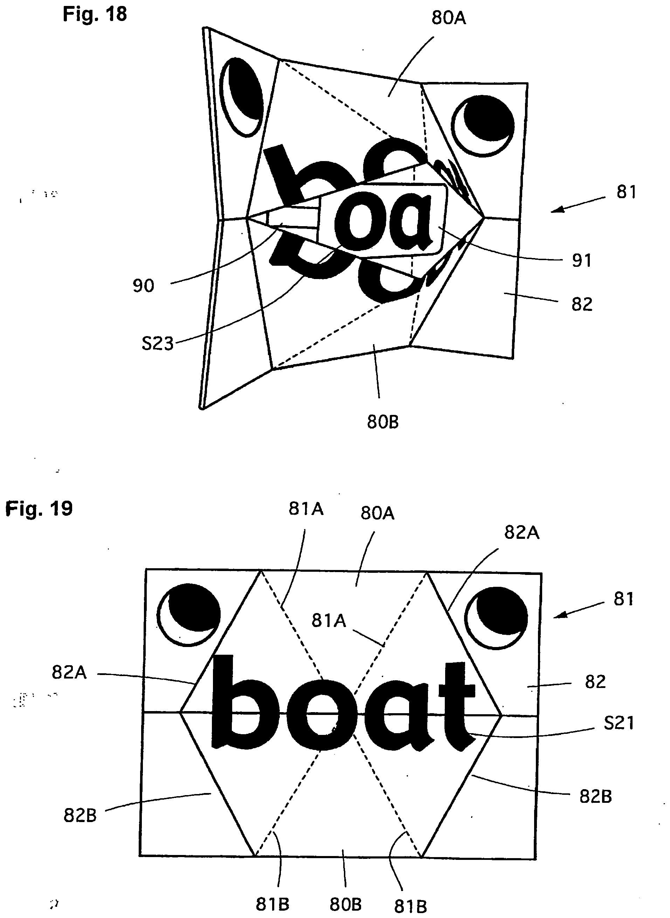

   Fig. 18 is a perspective view of a second embodiment of a language learning device of this design when it is bent.
[Fig. 19]
   Fig. 19 is a plane view of the second embodiment of the language learning device of this design when it is opened out flat.
[Fig. 20]

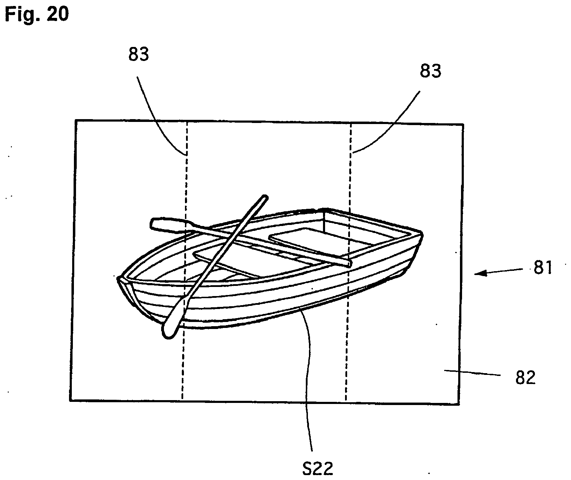

   Fig. 20 is a back view of the second embodiment of the language learning device of this design when it is opened out flat.
[Fig. 21]

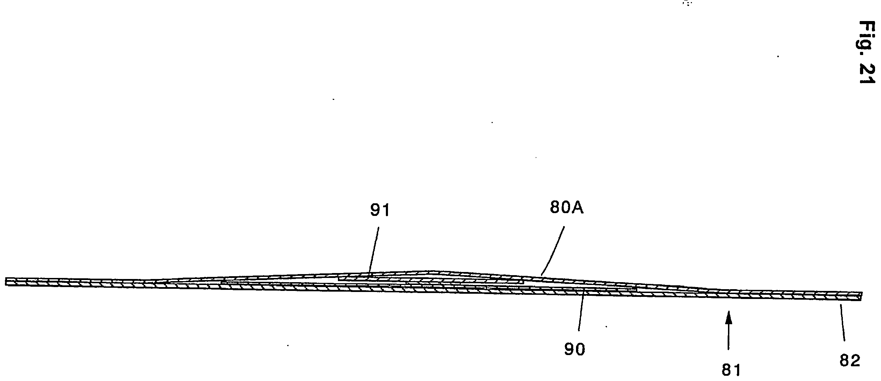

   Fig. 21 is a sectional view of the second embodiment of the language learning device of this design when it is opened out flat.
[Fig. 22]

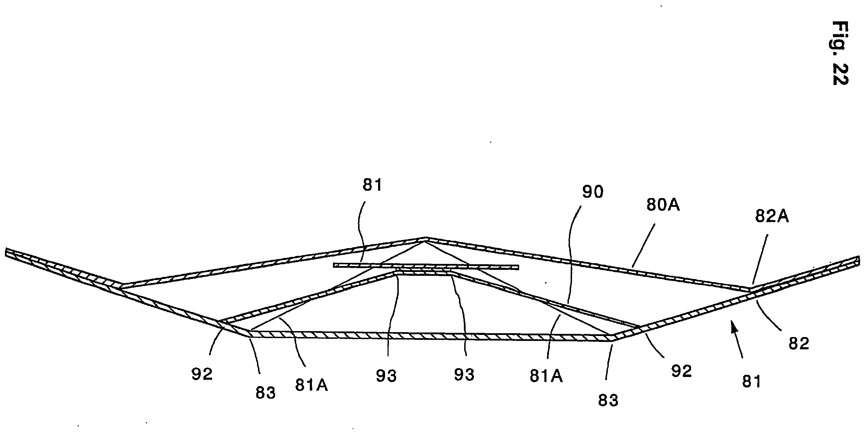

   Fig. 22 is a sectional view of the second embodiment of the language learning device of this design when it is bent.
[Fig. 23]

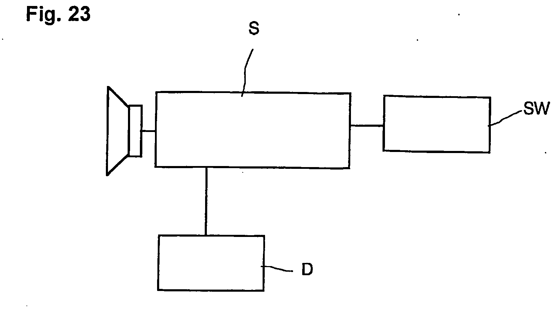

   Fig. 23 is an electrical circuit diagram of the first embodiment of the language learning device of this design.

### BEST MODE FOR CARRYING OUT THE INVENTION

Specific embodiments of the present invention will be described below in detail with reference the accompanying drawings. Fig. 1 to Fig. 11 illustrate a first embodiment of a learning device of the present invention. Reference numeral 1 in the figures denotes a learning device body. The learning device body 1 comprises a base board 2 which is foldable along a folding line, a lid-like member composed of component members 10A, 10B which rise and fall from a three-dimensional shape to a plane shape upon the bending of the above base board, and a rising/lowering member 20 which becomes visible in an opening M created when the above lid-like member rises . They are formed by bonding bendable sheet materials together. The embodiment employs cardboard as the sheet materials, but it will be understood that the materials are not limited to this.

The lid- like member comprises a plurality of component members 10A, 10B which respectively rise/fall with the decreasing/increasing of the distances between the base sides 12A and 12A of the one component member and between the base sides 12B and 12B of the other and respectively have neighboring edges keeping contact with each other when they are laid flat and separated from each other when they are raised to create the opening M. For this purpose, the lid-like member has folding lines 11A and 11A, 11B and 11B in order to rise to form a predetermined shape when the distances between the base sides 12A and 12A, 12B and 12B are decreased.

In the embodiment the base board 2 has two folding lines provided in two places. Thus, right and left portions, which respectively extend from the folding lines to the outer edges, are bent relative to an intermediate portion of the base board interposed between these two folding lines. These two folding lines 3, 3 are respectively provided on the right and left sides of the center and extend in the up-down direction (see Fig. 3 and Figs. 9 to 11). The lid-like member has paired parts arranged opposite each other in the upper and lower portions of the base board such that the base sides 12A and 12A, 12B and 12B are located in the area of the base board further out than the two folding lines 3, 3 of the base board 2. The above base sides 12A and 12A, 12B and 12B and the folding lines 11A and 11A, 11B and 11B form triangles (see Fig. 2) . As a result, when the lid-like member rises, in each part, a three-dimensional shape can be obtained, which is made up of wall faces including an erection triangle and a pair of triangles inverted in relation to the erection triangle placed on the both sides of the erecting triangle with the folding lines as boundaries. In this case, the pair of component members 10A, 10B of the lid-like member, which are respectively placed opposite each other in the upper and lower portions of the base board, are arranged opposite each other such that the base sides of the inverted triangles of one component member are adjacent to those of the other component member as neighboring sides. For this reason, in the three-dimensional shape formed when the lid-like member rises, the neighboring base sides of the triangles of the component members 10A, 10B move in directions separating them from each other to create an opening M (see Fig. 1).

The rising/lowering member 20, placed between the base board 2 and the reverse face of the lid-like member, rises and falls with the decreasing and increasing of the distance between base sides 22 and 22. For this purpose, the rising/lowering member 20 has base sides 22 and 22 arranged in the area of the base board 2 further out than the folding lines 3, 3, and has folding lines 23 and 23 provided such that the rising/lowering member 20 rises in a predetermined shape (a trapezium in this embodiment) when the distance between the base sides 22 and 22 is decreased (see Fig. 4 and Figs. 9 to 11).

The rising/lowering member 20 is hidden between the closed lid-like member and the base board when the learning device body 1 is opened out flat (see Fig. 2), and on the other hand, rises and causes the leading end to become visible from the opening when the right and left portions of the learning device body 1 on the two sides of the intermediate portion are bent so as to raise the lid-like member for creating the opening M (see Fig. 1).

Reference numeral 30 in the figures denotes a sign board detachably provided to the leading end of the rising/lowering member 20. As the attaching/detaching means, the embodiment employs a detaching method using a magnetic force generated by magnetic-force plates 21 and 31 which are respectively provided on the leading end of the rising/lowering member and the back face of the sing board. In this case, any one of the magnetic-force plates 21 and 31 may be magnetized, but if the magnetic-force plate 31 of the sign board 30 is magnetized, additional sign boards can be attached, for example, to a metal-made blackboard. Note that it should be understood that the detachable means is not limited to the above case, and for example, a velvet fastener or another well-known means may be employed.

Reference numeral S1 in the figures denotes a sign assigned to the surface of the lid-like member of the learning device body 1, S2 a sign assigned to the back face of the base board 2 of the learning device body, and S3 a sign assigned to the surface of the sign board 30 attached to and detached from the rising/lowering member 20. These signs can be a letter, a phrase, picture and the like, which are appropriately printed in relation to each other in order for a teacher to show the sign to pupils for teaching them letters, word structure and pronunciation to visually assist in the learning of them. For example, in the embodiment, a small letter "a" is displayed as the sign S1 assigned to the surface of the lid-like member of the learning device body 1, and a capital letter "A" is displayed on the back face of the learning device body. On the other hand, as the sign of the sign board 30 corresponding to these displayed signs, a picture of an "apple" including the indicated letter is displayed. Appropriate provision is made for other sign boards 30 with a sign S4 of a picture of an "axe" (see Fig. 7), a sign S5 of a picture of an "ant" (see Fig. 8) and the like. As a result, a teacher can use a single learning device to conduct flexible and various teaching by appropriately changing the sign boards, and beneficial advantages are produced when teaching a vowel sound and a consonant sound.

In the embodiment, an empty space 4 is provided in the base board 2 of the learning device body 1 as illustrated in Fig. 3 for inserting the sign board 30, and open ends 5, 5 of the empty space are formed in the end faces of the base board, so that the sign board can be housed in the base board. The employment of this structure eliminates the teacher's need for holding a plurality of types of sign boards in his/her hands when the sign boards are used for a single learning device, which makes it possible for the teacher to immediately take one out for use. As a result, the effectiveness of allowing the teacher to quickly change the sign boards in a rhythmical movement is provided. Reference numeral 6, 6 in the figures denote a magnetic force plate provided in the base board for preventing the sign board 30 housed in the base board from breaking away.

In the embodiment, as illustrated, for example, in the sign S1 in Fig. 2 and the sign S2 in Fig. 3, indicators showing order strokes (here using numerals indicating the order and the drawing of a finger representing the direction) are applied to the letter. The teacher uses his/her index finger to trace the letter in accordance with the order of strokes, thereby easily teaching his/her pupils in an understandable and visual way how to form a capital letter or a small letter. Even if the teacher simply traces the indicators provided inside the letter, the outer shape of the letter is clearly recognized without being obstructed by the movement of the teacher. In addition, a language teaching method using the tracing of a letter with a finger places prime importance on the teacher's teaching in immediate proximity to the pupil with movement. The teaching method using a finger to trace a letter decreases the frequency of use of the blackboard or the like in a lesson plan in a classroom.

In the embodiment, a sound reproducer S is provided in the base board 2 of the learning device body 1, while a sound data recording medium D is provided in the sign board 30. The sound reproducer is a known one having a substrate on which a sound reproducing integrated circuit for reproducing sound on the basis of digital data, electric battery, and speakers are mounted. The sound reproducer is embedded in the sign board 2 or alternatively is interposed between the sign board 2 and the lid-like member. The sound data recording medium D has an IC tip and the like for storing data on the sound of the pronunciations of words and letters and on related music, which is connected to the sound reproducing integrated circuit of the sound reproducer S through a continuity path, not shown, when the sign board 30 is placed on the rising/lowering member 20.

When the lid-like member opens, the above-described sound reproducer S reproduces the sound corresponding to the sign board on the basis of the sound data read from the sound data recording medium, which makes it possible for pupils to learn a letter, word structure and pronunciation through their ears. A possible means for informing the sound reproducer that the lid-like member is opened, for example, a switch SW activated in response to the rising angle of the lid-like member, or the like (see Fig. 23)

Fig. 18 to Fig. 22 illustrate a second embodiment of a learning device of the present invention. Reference numeral 81 in the figures denotes a learning device body. The learning device body 81 comprises a base board 82 which is foldable along the folding line, a lid-like member composed of component members 80A, 80B which rise and fall from a three-dimensional shape to a plane shape upon the bending of the above base board, and a rising/lowering member 90 which becomes visible in an opening M created when the above lid-like member rises. They are formed by bonding bendable sheet materials together. The embodiment employs cardboard as the sheet materials, but it will be understood that the materials are not limited to this.

The lid- like member comprises a plurality of component members 80A, 80B which respectively rise/fall with the decreasing/increasing of the distances between the base sides 82A and 82A of one component member and between the base sides 82B and 82B of the other and respectively have neighboring edges keeping contact with each other when they are laid flat and separated from each other when they are raised to create the opening M. For this purpose, the lid-like member has folding lines 81A and 81A, 81B and 81B in order to rise to form a predetermined shape when the distances between the base sides 82A and 82A, 82B and 82B are decreased.

In the embodiment the base board 82 has two folding lines provided in two places. Thus, right and left portions, which respectively extend from the folding lines to the outer edges, are bent relative to an intermediate portion of the base board interposed between these two folding lines. These two folding lines 83, 83 are respectively provided on the right and left sides of the center and extend in the up-down direction (see Figs. 20, 21 and 22). The lid-like member has paired parts arranged opposite each other in the upper and lower portions of the base board such that the base sides 82A and 82A, 82B and 82B are located in the area of the base board further out than the two folding lines 83, 83 of the base board 82. The above base sides 82A and 82A, 82B and 82B and the folding lines 81A and 81A, 81B and 81B form triangles (see Fig. 19). As a result, when the lid-like member rises, in each part, a three-dimensional shape can be obtained, which is made up of wall faces including an erection triangle and a pair of triangles inverted in relation to the erection triangle placed on the both sides of the erecting triangle with the folding lines as boundaries. In this case, the pair of component members 80A, 80B of the lid-like member, which are respectively placed opposite each other in the upper and lower portions of the base board, are arranged opposite each other such that the base sides of the inverted triangles of one component member are adjacent to those of the other component member as neighboring sides. For this reason, in the three-dimensional shape formed when the lid-like member rises, the base sides of the triangles of the component members 80A, 80B move in directions separating them from each other to create an opening M (see Fig. 18).

The rising/lowering member 90, placed between the base board 82 and the reverse face of the lid-like member, rises and falls with the decreasing and increasing of the distance between base sides 92 and 92. For this purpose, the rising/lowering member 90 has base sides 92 and 92 arranged in the area of the base board 2 further out than the folding lines 83, 83, and has folding lines 93 and 93 provided such that the rising/lowering member 90 rises in a predetermined shape (a trapezium in this embodiment) when the distance between the base sides 92 and 92 is decreased (see Fig. 22).

The rising/lowering member 90 is hidden between the closed lid-like member and the base board when the learning device body 81 is opened out flat (see Fig. 19), and on the other hand, rises and causes the leading end to become visible from the opening when the right and left portions of the learning device body 81 on the two sides of the intermediate portion are bent so as to raise the lid-like member for creating the opening M (see Fig. 18).

Reference numeral 91 in the figures denotes a sign board detachably provided to the leading end of the rising/lowering member 90. Reference numeral S21 in the figures denotes a sign assigned to the surface of the lid-like member of the learning device body 21, S22 a sign assigned to the back face of the base board 22 of the learning device body, and S23 a sign assigned to the surface of the sign board 91. These signs can be a letter, a phrase, picture and the like, which are appropriately printed in relation to each other in order for a teacher to show the sign to pupils for teaching them letters, word structure and pronunciation to visually assist in the learning of them. For example, a word "boat" is displayed as the sign S21 assigned to the surface of the lid-like member of the learning device body 81, and a picture of the "boat" is displayed as the sign S22 on the back face of the learning device body. On the other hand, as the sign S23 of the sign board 91 corresponding to these displayed signs, a diphthong symbol "oa" including the word "boat" is displayed.

## Claims

1. A language learning device which comprises a learning device body (1) including a base board (2) having a surface to which are fixed each of the base sides (12A, 12B) of a lid-like member and also each of the base sides (22) of a rising/lowering member (20),
wherein the lid-like member rises/falls with decreasing/increasing the distance between the base sides (12A,12B) of the lid-like member and comprises a plurality of component members (10A,10B) having neighboring edges that are in contact with each other when they are laid flat and separated from each other to form an opening (M) when they are raised,
wherein the rising/lowering member (20) is located inside the lid-like member and rises/falls with decreasing/increasing of the distance between the base sides (22) of the rising/lowering member (20),
wherein the base board (2) is bendable along folding lines (3) provided in two places, so that right and left portions of the base board (2), which respectively extend from the folding lines (3) to the outer edges, are bendable relative to an intermediate portion of the base board (2) interposed between the folding lines (3), so that the distance between the base sides (12A,12B) of the lid-like member and between the base sides (22) of the rising/lowering member (20) is changed by bending the base board (2) so as to raise/lower the lid-like member and the rising/lowering member (20) in order to make the rising/lowering member (20) become visible from the opening (M) formed when the lid-like member is raised, and
wherein the language learning device has different signs (S1,S2,S3) respectively placed on the surface of the lid-like member and the leading end of the rising/lowering member (20), so that the different signs (S1,S2,S3) become visually recognized in accord with the bending of the base board (2).

2. The language learning device according to claim 1,
wherein the sign (S1,S2,S3) placed on the leading end of the rising/lowering member (20) is attached to the surface of a sign board (30) detachably provided to the rising/lowering member (20).

3. The language learning device according to claim 2,
wherein a magnetic force is used as attaching/detaching means of the rising/lowering member (20) and the sign board (30).

4. The language learning device according to claim 2 or claim 3, comprising means for making the sign board (30) detachable from the base board (2).

5. The language learning device according to claim 2, having a sound reproducer (S) provided in the base board, a sound data recording medium (D) provided in the sign board (30), and means for detecting that the lid-like member is opened and informing the sound reproducer (S) of the detection, wherein when the lid-like member is opened, sound corresponding to the sign board (30) is reproduced on the basis of sound data read from the sound data recording medium (D).

6. The language learning device according to claim 2,
wherein a space is provided in the base board (2) for inserting the sign board (30) in the base board (2), and an open end (5) of the space is provided in an end face of the base board (2), whereby means for making the sign board (30) detachable from the base board (2) is provided.

## Patentansprüche

1. Sprachlernvorrichtung, die einen Sprachlernvorrichtungskörper (1) umfasst, der eine Basistafel (2) einschließt, die eine Oberfläche hat, an der jede der Basisseiten (12A, 12B) eines deckelartigen Teils und außerdem jede der Basisseiten (22) eines Hebe-/Absenkteils (20) befestigt sind,
worin das deckelartige Teil mit dem Verringern/Erhöhen des Abstands zwischen den Basisseiten (12A, 12B) des deckelartigen Teils steigt/sinkt und eine Vielzahl von Komponententeilen (10A, 10B) umfasst, die benachbarte Ränder haben, die einander berühren, wenn sie zusammengelegt sind, und voneinander getrennt sind, um eine Öffnung (M) zu bilden, wenn sie angehoben sind, worin das Hebe-/Absenkteil (20) innerhalb des deckelartigen Teils angeordnet ist und mit dem Verringern/Erhöhen des Abstands zwischen den Basisseiten (22) des Hebe-/Absenkteils (20) steigt/sinkt,
worin die Basistafel (2) entlang von Faltlinien (3), die an zwei Stellen bereitgestellt sind, biegbar ist, sodass rechte und linke Abschnitte der Basistafel (2), die sich jeweils von den Faltlinien (3) zu den äußeren Rändern erstrecken, relativ zu einem dazwischenliegenden Abschnitt der Basistafel (2), der zwischen den Faltlinien (3) eingefügt ist, biegbar sind, sodass der Abstand zwischen den Basisseiten (12A, 12B) des deckelartigen Teils und zwischen den Basisseiten (22) des Hebe-/Absenkteils (20) durch Biegen der Basistafel (2) verändert wird, um dadurch das deckelartige Teil und das Hebe-/Absenkteil (20) anzuheben/abzusenken, um das Hebe-/Absenkteil (20) von der Öffnung (M) her, die gebildet wird, wenn das deckelartige Teil angehoben wird, sichtbar zu machen, und worin die Sprachlernvorrichtung unterschiedliche Zeichen (S1, S2, S3) hat, die jeweils auf der Oberfläche des deckelartigen Teils und dem Vorderende des Hebe-/Absenkteils (20) platziert sind, sodass die unterschiedlichen Zeichen (S1, S2, S3) in Übereinstimmung mit dem Biegen der Basistafel (2) visuell erkannt werden.

2. Sprachlernvorrichtung nach Anspruch 1, worin das auf dem Vorderende des Hebe-/Absenkteils (20) platzierte Zeichen (S1, S2, S3) an der Oberfläche einer Zeichentafel (30) angebracht ist, die abnehmbar am Hebe-/Absenkteil (20) bereitgestellt ist.

3. Sprachlernvorrichtung nach Anspruch 2, worin eine magnetische Kraft als Anbring-/Abnehmmittel des Hebe-/Absenkteils (20) und der Zeichentafel (30) verwendet wird.

4. Sprachlernvorrichtung nach Anspruch 2 oder Anspruch 3, umfassend Mittel, um die Zeichentafel (30) von der Basistafel (2) abnehmbar zu machen.

5. Sprachlernvorrichtung nach Anspruch 2 mit einem in der Basistafel (2) bereitgestellten Tonwiedergabegerät (S), einem in der Zeichentafel (30) bereitgestellten Tondatenaufzeichnungsmedium (D) und Mitteln zum Ermitteln, dass das deckelartige Teil geöffnet wird, und Informieren des Tonwiedergabegeräts (S) über die Ermittlung, worin, wenn das deckelartige Teil geöffnet wird, der Zeichentafel (30) entsprechender Ton wiedergegeben wird, und zwar auf der Grundlage von Tondaten, die aus dem Tondatenaufzeichnungsmedium (D) gelesen werden.

6. Sprachlernvorrichtung nach Anspruch 2, worin in der Basistafel (2) ein Raum zum Einsetzen der Zeichentafel (30) in die Basistafel (2) bereitgestellt ist und in einer Endfläche der Basistafel (2) ein offenes Ende (5) des Raums bereitgestellt ist, wodurch Mittel bereitgestellt werden, um die Zeichentafel (30) von der Basistafel (2) abnehmbar zu machen.

## Revendications

1. Dispositif d'apprentissage d'une langue, comprenant un corps du dispositif d'apprentissage (1) incluant une plaque de base (2) comportant une surface sur laquelle sont fixés chacun des côtés de base (12A, 12B) d'un élément en forme de couvercle, ainsi que chacun des côtés de base (22) d'un élément montant/descendant (20) ;
dans lequel l'élément en forme de couvercle remonte/retombe en fonction de la réduction/de l'accroissement de la distance entre les côtés de base (12A, 12B) de l'élément en forme de couvercle, et comprend plusieurs éléments constitutifs (10A, 10B) comportant des bords voisins en contact les uns avec les autres lorsqu'ils sont mis à plat et séparés les uns des autres pour former une ouverture (M) lorsqu'ils sont soulevés ;
dans lequel l'élément montant/descendant (20) est agencé à l'intérieur de l'élément en forme de couvercle et remonte/retombe en fonction de la réduction/de l'accroissement de la distance entre les côtés de base (22) de l'élément montant/descendant (20) ;
dans lequel la plaque de base (2) peut être pliée le long de lignes de pliage (3) formées en deux emplacements, de sorte que les parties de droite et de gauche de la plaque de base (2), s'étendant respectivement à partir des lignes de pliage (3) vers les bords externes, peuvent être pliées par rapport à une partie intermédiaire de la plaque de base (2) positionnée entre les lignes de pliage (3), la distance entre les côtés de base (12A, 12B) de l'élément en forme de couvercle et entre les côtés de base (22) de l'élément montant/descendant (20) étant changée par pliage de la plaque de base (2), de sorte à remonter/descendre l'élément en forme de couvercle et l'élément montant/descendant (20) pour rendre l'élément montant/descendant (20) visible à partir de l'ouverture (M) formée lorsque l'élément en forme de couvercle est soulevé ; et
dans lequel le dispositif d'apprentissage d'une langue comporte des signes différents (S1, S2, S3) placés respectivement sur la surface de l'élément en forme de couvercle et l'extrémité avant de l'élément montant/descendant (20), les différents signes (S1, S2, S3) pouvant ainsi être reconnus visuellement en fonction du pliage de la plaque de base (2).

2. Dispositif d'apprentissage d'une langue selon la revendication 1, dans lequel le signe (S1, S2, S3) placé sur l'extrémité avant de l'élément montant/descendant (20) est fixé sur la surface d'une plaque de signalisation (30) agencée de manière détachable sur l'élément montant/descendant (20).

3. Dispositif d'apprentissage d'une langue selon la revendication 2, dans lequel une force magnétique est utilisée comme moyen d'attache/de détachement de l'élément montant/descendant (20) et de la plaque de signalisation (30).

4. Dispositif d'apprentissage d'une langue selon les revendications 2 ou 3, comprenant un moyen pour permettre le détachement de la plaque de signalisation (30) de la plaque de base (2).

5. Dispositif d'apprentissage d'une langue selon la revendication 2, comportant un reproducteur de sons (S) agencé dans la plaque de base (2), un support d'enregistrement des données sonores (D) agencé dans la plaque de signalisation (30) et un moyen de détection de l'ouverture de l'élément en forme de couvercle, informant le reproducteur de sons (S) de la détection, dans lequel, lorsque l'élément en forme de couvercle est ouvert, le son correspondant à la plaque de signalisation (30) est reproduit sur la base des données sonores lues à partir du support d'enregistrement des données sonores (D).

6. Dispositif d'apprentissage d'une langue selon la revendication 2, dans lequel un espace est établi dans la plaque de base (2) pour insérer la plaque de signalisation (30) dans la plaque de base (2), une extrémité ouverte (5) de l'espace étant agencée dans une face d'extrémité de la plaque de base (2), fournissant ainsi le moyen permettant de détacher la plaque de signalisation (30) de la plaque de base.
